# EUROPEAN PATENT SPECIFICATION

(11) **EP 1 233 285 B1**
(45) Date of publication and mention of the grant of the patent: **25.07.2012**
(21) Application number: 00974926.8
(22) Date of filing: 10.11.2000
(51) Int. Cl.: G02B 3/00, G02B 3/06, G02B 13/00, C03B 23/00

(54) **MANUFACTURING METHOD OF OPTICAL LENS**
HERSTELLUNGSVERFAHREN FÜR EINE OPTISCHE LINSE
PROCEDE DE FABRICATION D'UNE LENTILLE OPTIQUE

(30) Priority: 10.11.1999 JP 31984799
(43) Date of publication of application: 21.08.2002
(73) Proprietor: HAMAMATSU PHOTONICS K.K., Hamamatsu-shi Shizuoka 435-8558 (JP)
(72) Inventor: KUSUYAMA, Yutaka, Hamamatsu-shi, Shizuoka 435-8558 (JP)
(74) Representative: Musker, David Charles
(86) International application number: PCT/JP2000/007955
(87) International publication number: WO 2001/035126

(56) References cited:
- EP-A- 0 441 594
- EP-A2- 0 752 394
- WO-A1-92/06046
- GB-A- 2 108 483
- JP-A- 7 291 651
- JP-A- 10 001 321
- JP-A- 10 096 803
- JP-A- 10 245 236
- JP-A- 57 181 516
- JP-A- 57 183 328
- JP-A- 58 168 026
- JP-A- 63 008 233
- US-A- 4 986 939
- US-A- 5 004 328
- US-A- 5 293 269
- DATABASE WPI Section Ch, Week 198408 Derwent Publications Ltd., London, GB; Class L02, AN 1984-044768 XP002305831 -& JP 59 003080 A (FUJITSU LTD) 9 January 1984 (1984-01-09)
- PATENT ABSTRACTS OF JAPAN vol. 007, no. 028 (C-149), 4 February 1983 (1983-02-04) & JP 57 183328 A (NIPPON DENSHIN DENWA KOSHA), 11 November 1982 (1982-11-11)
- PATENT ABSTRACTS OF JAPAN vol. 007, no. 030 (P-173), 5 February 1983 (1983-02-05) & JP 57 182701 A (NIPPON DENSHIN DENWA KOSHA), 10 November 1982 (1982-11-10)

## Description

### Technical Field

The present invention relates to a method of manufacturing an optical lens that acts on a light beam emitted from a light-emitting device and, more particularly, to a method of manufacturing an optical lens that acts on light beams emitted from a light-emitting device in which a plurality of light-emitting portions are arrayed.

### Background Art

In the manufacture of an optical lens for a semiconductor laser array in which a plurality of light-emitting portions are arrayed, conventionally, the manufacture with a precision mold or manufacture by applying a silicon semiconductor manufacturing process or LIGA process has been performed. In the conventional optical lens manufacturing method, the size itself of the required optical lens is very small, and accordingly it is very difficult to form an optical acting portion that collimates or condenses light beams emitted from the light-emitting portions of the semiconductor laser array. It is, therefore, an object of the present invention to provide an optical lens manufacturing a method which can form an optical acting portion easily. WO 92/06046 describes a method of forming a cylindrical microlens, comprising the steps of forming a noncircular glass preform having the shape of a cylindrical lens with at least one curved surface, and drawing the glass preform to form a cylindrical lens having the cross-sectional shape of the preform, but with cross-sectional dimensions reduced below the cross-sectional dimensions of the preform.

### Disclosure of the Invention

According to the invention, there is provided a method of manufacturing an optical lens in accordance with claim 1. There is also provided a preferred embodiment of the invention in accordance with claim 2.

According to the invention, the method of manufacturing an optical lens comprises forming a first optical lens preform of a first transparent material by forming an array of half cylinders arranged side by side in contact with each other, drawing the first optical member preform, and slicing the first optical member preformto form a first optical lens for receiving light emitted from a semiconductor laser array.

According to this method of manufacturing an optical lens, the shape of the optical lens, and particularly the shape of the first optical acting portion, can be determined at the stage of the preform before primary drawing. Thus, the preform can be machined with a sufficiently large size. Note that the "optical acting portion" refers to a portion that can emit an incident divergent light beam after reducing its divergent angle. The "first optical member" is included in the optical lens. Concerning a term with a prefix "first", the portion corresponding to the "first" may be omitted if consideration is made with only the contents described above.

The preferred embodiment of the method of manufacturing an optical lens according to the present invention further comprises the forming a second transparent material around the first optical lens perform to form a second optical lens preform, drawing the second optical lens preform, slicing the second optical lens preform to form an optical lens form, and cutting the optical lens form to form a second optical lens.

According to this preferred embodiment of the method of manufacturing an optical lens, an optical lens in which one optical member is buried in the other optical member is fabricated. The first optical member array can be arranged to be surrounded by the second optical member at the stage of the preform before the secondary drawing step. Thus, the arranging operations can be performed with a sufficiently large size.

For example, the second optical member may have a cylindrical tube and a plurality of spacers arranged to fill a gap between the cylindrical tube and one or two rows of first optical member arrays inserted at a center in the cylindrical tube. Since the second optical member is divided into a plurality of portions, it can be arranged more easily.

The first transparent material preferably has a thermal expansion coefficient which is higher than that of the second transparent material. When an optical lens is manufactured by covering a material with a high thermal expansion coefficient with a material with a low thermal expansion coefficient, a strong structure which is not broken easily can be obtained due to a caulking effect.

The first transparent material preferably has a refractive index which is different from that of the second transparent material. Then, the operation with the optical acting portion functions effectively by utilizing a difference in refractive index.

The first transparent material preferably has a yielding point which is higher than a temperature necessary for the secondary drawing step, and the second transparent material preferably has a yielding point which is lower than a temperature necessary for the secondary drawing step. Then, in the secondary drawing step, while the first optical member made of the first transparent material maintains its shape, the second optical member made of the second transparent material is dissolved, and the second transparent material fills the gap between the first and second optical members.

When the optical lens preform is to be sliced in the optical lens form forming step, it may be sliced while inclined with respect to a drawing direction. Then, an optical lens in which first optical members are arrayed to be inclined with respect to the axial direction of the first optical member array can be fabricated. An example of an alternative optical lens manufacturing method may comprise the optical lens preform forming step of forming an optical lens preform formed such that the first optical member array formed by arraying a predetermined number of first optical members fabricated in the first optical member forming step in one or two rows is surrounded by a second optical member, the heating/compressing step of heating and compressing the optical lens preform fabricated in the optical lens preform forming step, the optical lens form forming step of slicing the optical lens preform heated and compressed in the heating/compressing step, thereby forming an optical lens form, and the optical lens form machining step of cutting the optical lens form fabricated in the optical lens form forming step, thereby forming an optical lens with a desired shape.

According to this manufacturing method, an optical lens can be fabricated by performing drawing operation once.

The first transparent material preferably has a yielding point which is higher than a temperature necessary for the heating/compressing step, and the second transparent material preferably has a yielding point which is lower than a temperature necessary for the heating/compressing step. Then, in the heating/compressing step, while the first optical member made of the first transparent material maintains its shape, the second optical member made of the second transparent material is dissolved, and the second transparent material fills the gap between the first and second optical members. In a further alternative example, the optical lens manufacturing method may comprise the optical lens preform forming step of solidifying a first optical member array, formed by arraying a predetermined number of first optical members fabricated in the first optical member forming step in one or two rows, with a light-transmitting resin from around, thereby forming an optical lens preform, the optical lens form forming step of slicing the optical lens preform fabricated in the optical lens preform forming step, thereby forming an optical lens form, and the optical lens form machining step of cutting the optical lens form fabricated in the optical lens form forming step, thereby forming an optical lens with a desired shape.

According to this manufacturing method, an optical lens can be fabricated by performing drawing operation once. Also, since the resin used for hardening transmits light, it serves as an optical member.

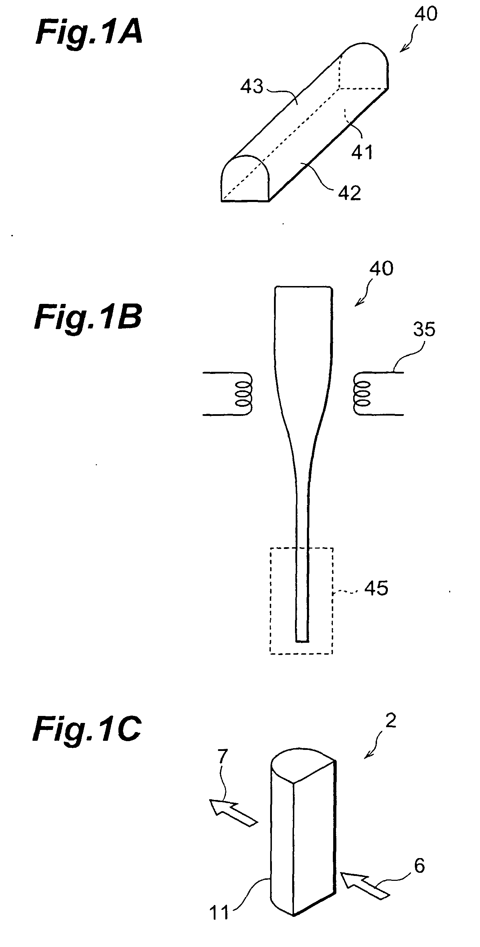

The first optical member preform described above has, e.g., a semicircular cylindrical shape. Note that the "semicircular cylindrical shape" refers to a columnar shape, as shown in Fig. 1A, with one side surface (the bottom surface in Fig. 1A) that forms a flat surface and the other side surface (the upper surface in Fig. 1A) that forms a convex curved surface. The curved surface may be aspherical, and a pair of side surfaces 42 formed of flat surfaces may be formed, as shown in Fig. 1A.

The first optical member preform described above may alternatively have a cylindrical shape.

The first transparent material preferably has a refractive index which is different from that of the second transparent material. Then, the operation with the optical acting portion functions effectively.

The optical lens form machining step may include machining such that either one of respective side surfaces of the first optical member array which does not have a first optical acting portion is exposed. When a portion with no optical acting portion is removed, the optical lens can be downsized.

The optical lens form machining step may include the second optical acting portion forming step of forming a second optical acting portion by polishing the second optical member. Alternatively, the optical lens form machining step may include the second optical acting portion forming step of forming a second optical acting portion by adhering an optical member made of the second transparent material to the second optical member. Then, optical acting portions are formed on the first and second optical members, respectively, so an optical lens that can optically act on the incident light beams in various manners is realized.

### Brief Description of the Drawings

Figs. 1A to 1C are schematic views showing the steps in an example of a method of manufacturing an optical lens; Figs. 2A to 2C are schematic views showing the steps in an example of a method of manufacturing an optical lens which is an example different from that shown in Fig. 1;
Figs. 3A to 3C are schematic views showing the steps in a method of manufacturing an optical lens according to the invention which is an example different from those shown in Figs. 1 and 2;
Figs. 4A and 4B are schematic views showing the steps in a method of manufacturing a buried type optical lens according to an embodiment;
Figs. 5A and 5B are schematic views showing the steps in a method of manufacturing a buried type optical lens according to an embodiment which is an example different from that shown in Fig. 4;
Figs. 6A and 6B are schematic views showing the steps in a method of manufacturing a buried type optical lens according to an embodiment which is an example different from those shown in Figs. 4 and 5;
Figs. 7A to 7D are schematic views showing the steps in a method of manufacturing a buried type optical lens according to an embodiment;
Figs. 8A and 8B are schematic views showing the steps in a method of manufacturing a buried type optical lens according to an embodiment which is an example different from that shown in Fig. 7;
Figs. 9A and 9B are schematic views showing the steps in a method of manufacturing a buried type optical lens according to an embodiment which is an example different from those shown in Figs. 7 and 8;
Figs. 10A to 10D are schematic views showing the steps in a method of manufacturing a buried type optical lens according to another embodiment; and Figs. 11A to 11C are schematic views showing the steps in a method of manufacturing a buried type optical lens according to a further embodiment.

### Best Mode of Carrying Out the Invention

The embodiments of the present invention will be described in detail with reference to the accompanying drawings. In the following description, the same or identical portions are denoted by the same reference numerals, and a repetitive explanation will be omitted.

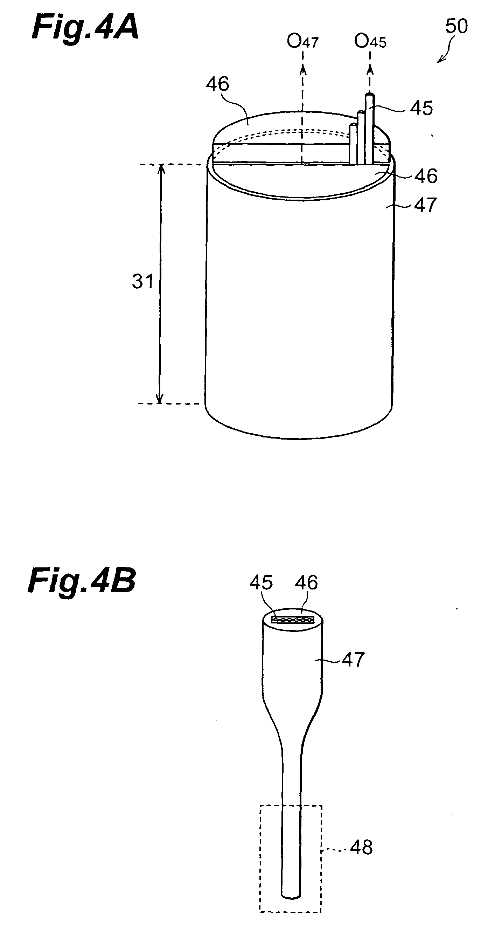

Figs. 1A to 1C are schematic views showing the steps in an example of a method of manufacturing an optical lens. First, an optical material made of a first transparent material (glass material) is prepared, and is molded into a semicircular cylindrical shape with a bottom surface 41 and convex curved surface 43, as shown in Fig. 1A, to form a first optical member preform 40. The upper convex curved surface 43 is a portion that forms a first optical acting portion 11 in a first optical member 2 as an optical lens to be formed. In this manner, in an optical lens manufacturing method employing drawing, the shape of an optical lens to be fabricated, and particularly the shape of an optical acting portion, can be formed at the stage of the first optical member preform 40 with a sufficiently large size. Thus, the operations of forming the shape of the optical lens and the shape of the optical acting portion can be performed easily and accurately. As shown in Fig. 1B, the molded first optical member preform 40 is fused by heating in an electric furnace 35 or the like and is subjected to primary drawing to obtain a desired diameter. That portion which has been subjected to primary drawing to reach the desired diameter is cut to form the first optical member 2 (this will be called the "core 45" in the description from Fig. 4). Because of the characteristics of the drawing process, the first optical member 2 has the same sectional shape as that of the first optical member preform 40. The first optical member 2 fabricated in this manner collimates an incident light beam 6 with the first optical acting portion 11 formed on the light-incident side and then emits an exit light beam 7.

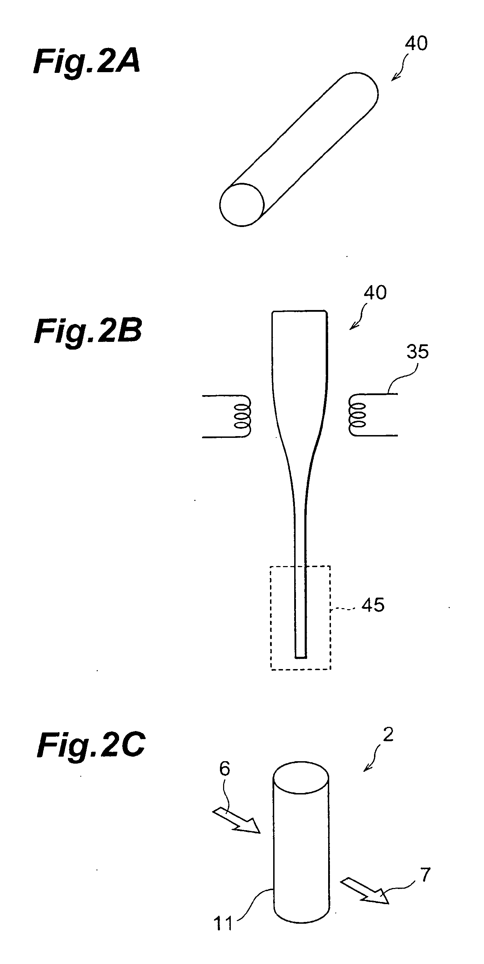

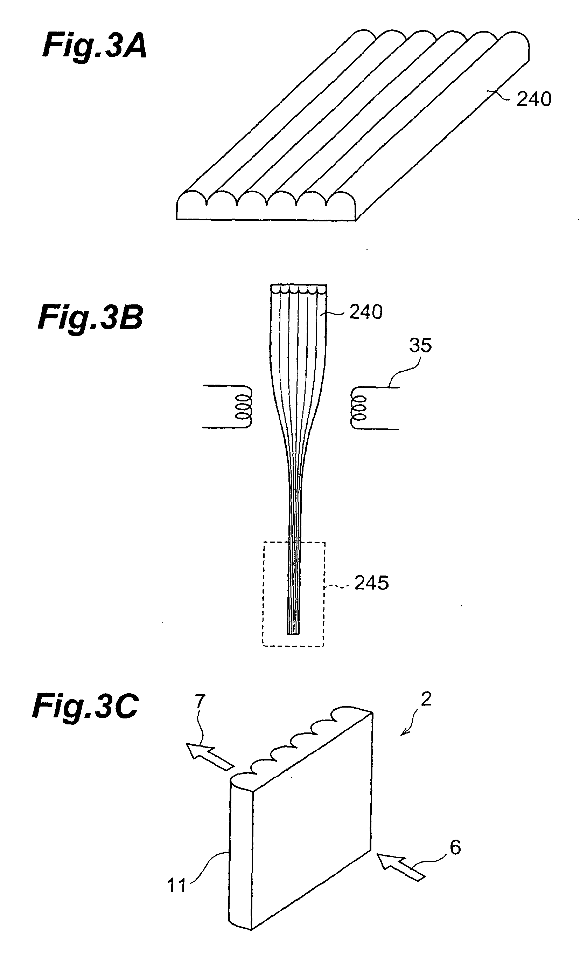

Figs. 2A to 2C and 3A to 3C show examples in which first optical member preforms 40 have different shapes. As shown in Fig. 2A, the first optical member preform 40 may be formed into a cylindrical shape. In this case, as shown in Fig. 2C, a first optical member 2 to be manufactured has first optical acting portions 11 on both the light-incident and light-exit sides. Each first optical acting portion 11 collimates a divergent incident light beam 6 and emits an emerging light beam 7. As shown in Fig. 3A, the first optical member preform 240 is fabricated by a plurality of first optical member preforms 40 with a semicircular cylindrical shape shown in Fig. 1A, which are arrayed side by side in tight contact with each other, in accordance with the invention. In this case, as shown in Fig. 3C, a first optical member with a plurality of first optical acting portions 11 is formed. Thus, one first optical member can cope with a semiconductor laser array serving as a light-emitting device in which a plurality of light-emitting portions are arrayed.

Figs. 4A and 4B are schematic views showing the steps in a method of manufacturing a buried type optical lens according to an embodiment. Fig. 4A shows the overall image of an optical lens preform 50. First, cores 45 each formed as shown in Fig. 1B are arrayed, with a second optical member, in one row at the center in a cylindrical pipe 47 which has the same length 31 as those of the cores 45 (the aligned cores 45 form a first optical member array 9). The second transparent material (example: BK7 (available from Schott), with a refractive index of 1.52, thermal expansion coefficient of 71 x 10⁻⁷ /K, and yielding point of 614°C) has a refractive index which is lower than that of the first transparent material (example: LaSFn14 (SUMITA KOGAKU), with a refractive index of 1.83, thermal expansion coefficient of 82 x 10⁻⁷ /K, and yielding point of 689°C) (if the refractive index of the first transparent material is higher than that of the second transparent material, the curved surfaces of first optical acting portions 11 are formed into convex curved surfaces; if the refractive index of the first transparent material is lower than that of the second transparent material, the curved surfaces of the first optical acting portions 11 are formed into concave curved surfaces). When aligning the cores 45, a central axis O₄₇ of the cylindrical pipe 47 and central axes O₄₅ of the plurality of cores 45 are parallel to each other and are also directed in the same direction as that of secondary drawing to be described next. The plurality of cores 45 are aligned such that their side surfaces 42 come into contact with each other. When a cylindrical one shown in Fig. 2A is to be used as each core 45, the vertical directions of the cores 45 need not be considered, and it suffices if the cores 45 are aligned such that their side surfaces come into contact with each other. Then, to fix the positions of the plurality of aligned cores 45, a pair of spacers 46 made of the same constituent material as that of a second optical member 3, i.e., the second transparent material, are inserted in the gap of the cylindrical pipe 47 to sandwich the plurality of cores 45 aligned in one row, thus forming the optical lens preform 50. The optical lens preform 50 is subjected to secondary drawing until a desired diameter is obtained, as shown in Fig. 4B, and is cut off the optical lens preform 50, thus obtaining a rod portion 48.

Since the operations of aligning the plurality of cores 45 and arranging the cores 45 and spacers 46 in the cylindrical pipe 47, as described above, are performed at the stage before the secondary drawing process, they are done with a sufficiently large size. As in an optical path converter disclosed in Japanese Patent Laid-Open No. 7-98402, first optical members may be arranged one by one in an array to correspond to the respective light-emitting portions of a semiconductor laser array. It is, however, very difficult to perform such operation within a very small area. With the optical lens manufacturing method according to this embodiment, the alignment operation and arranging operation as described above can be performed with a sufficiently large size. Hence, the above inconvenience is eliminated.

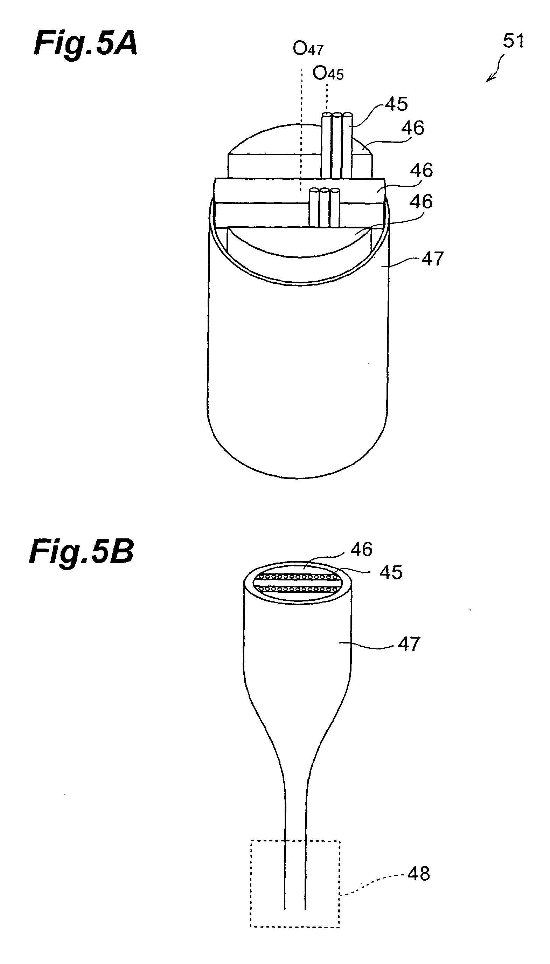

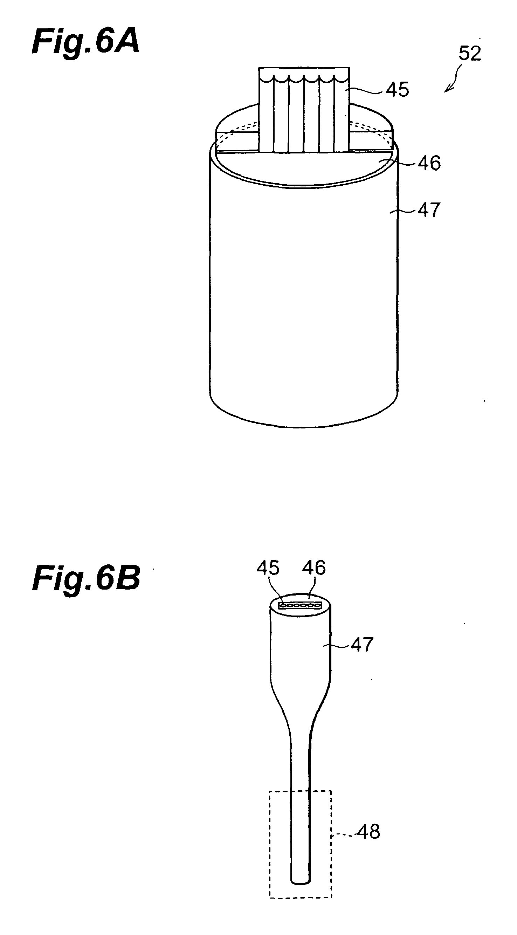

Alternatively, as shown in Figs. 5A and 5B, cores 45 may be aligned in two rows at the center of a cylindrical pipe 47 made of the second transparent material such that the two rows are parallel to each other, and gaps may be filled with three spacers 46, thus forming an optical lens preform 51 (see Fig. 5A). In this case, an optical lens is formed in which two rows of the first optical member arrays 9 are buried in the second optical member. Alternatively, as shown in Figs. 6A and 6B, an optical lens preform 52 may be formed by using cores 245 shown in Fig. 3B. As has been described earlier, the cores 245 are integrally molded, so the step of aligning a plurality of cores in a cylindrical pipe 47 can be omitted.

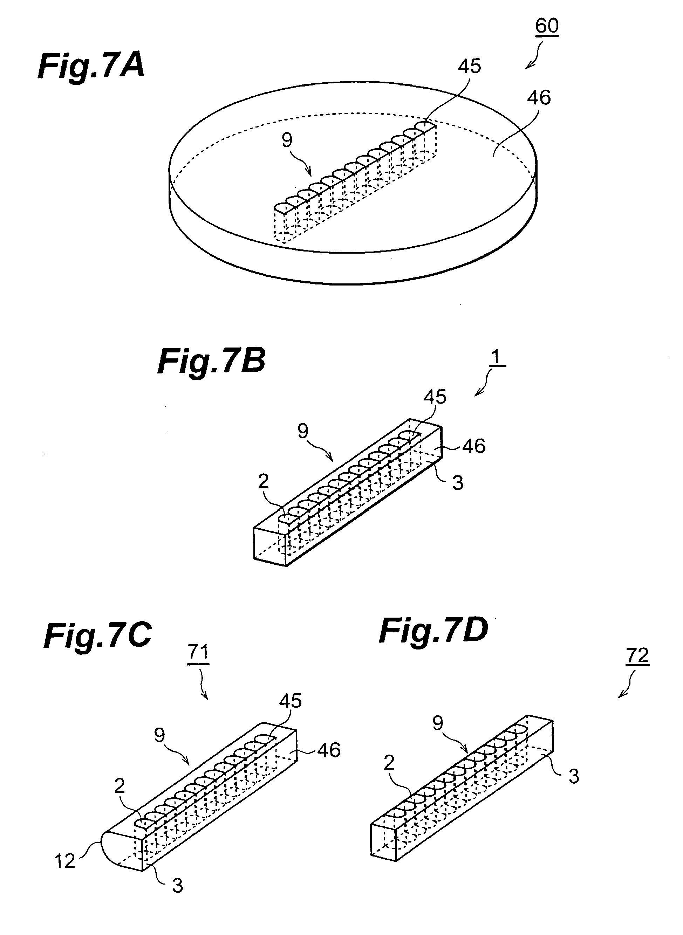

Figs. 7A to 7D are schematic views showing the steps in a method of manufacturing a buried type optical lens according to an embodiment, which follow the step in Fig. 4B. The rod portion 48 obtained in Fig. 4B is subjected to slicing (note that the step of cutting the cores 45 and rod portion 48 off the drawn optical lens preform may also be included in this "slicing"), to obtain an optical lens form 60 shown in Fig. 7A. The optical lens form 60 is subjected to cutting to remove unnecessary portions of a spacer 46, and its outer portion is polished, thus forming an optical lens 1 with a desired size (see Fig. 7B).

Since the optical lens 1 fabricated in this manner has a first optical member array 9 formed by arraying first optical members 2, it can cope with a semiconductor laser array in which a plurality of light-emitting portions are arrayed. As the first optical member array 9 is buried in a second optical member 3, the uneven portions of first optical acting portions 11 are not exposed to the outside. Hence, dust will not be accumulated in the uneven portions to form a shadow, and the optical lens 1 with a good light-emitting performance is realized. As the optical lens 1 is reinforced by the second optical member 3, it has a large strength as well.

With the optical lens manufacturing method according to an embodiment, the manufacture is performed by using two optical members. Thus, the manufacture can be performed by appropriately setting the refractive indices of the two optical members, and particularly by setting a large difference between the refractive indices. As is disclosed in Japanese Patent Laid Open Nos. 7-287104 and 7-98402, lenses with different refractive indices may be formed on the outer surface of one optical lens by utilizing ion exchange. In this case, however, a sufficiently large refractive index difference cannot be provided between that portion which has been subjected to ion exchange and that portion which has not, which is inconvenient. In the optical lens manufacturing method according to this embodiment, since the optical lens can be formed of different optical members, this inconvenience is solved.

Furthermore, the temperature required for the secondary drawing process is set to be lower than the yielding point of the first transparent material and higher than that of the second transparent material. Thus, the first optical members 2 made of the first transparent material are not dissolved in the secondary drawing process, and the second optical member 2 made of the second transparent material is dissolved in the secondary drawing process. The dissolved optical member fills the gap between the first and second optical members 2 and 3. Hence, an optical lens with no gap is fabricated.

In the first embodiment, a second optical acting portion 12 is formed by cutting and polishing the spacer 46 portion in the final process, so the optical lens 1 as shown in Fig. 7C can be fabricated. Alternatively, a second optical acting portion 12 may be formed by adhering optical members made of the second transparent material. As a result, the first and second optical acting portions are respectively formed on the first optical member 2 and the second optical member, so an optical lens 71 capable of optically acting on the incident light beams in various manners is realized. Furthermore, at the stage of the optical lens form 60, machining may be performed so that any one of the respective side surfaces of the first optical member array 9 which does not have a first optical acting portion may be exposed, thereby forming an optical lens 72 as shown in Fig. 7D. As the portion not having an optical acting portion is removed, the optical lens can be downsized.

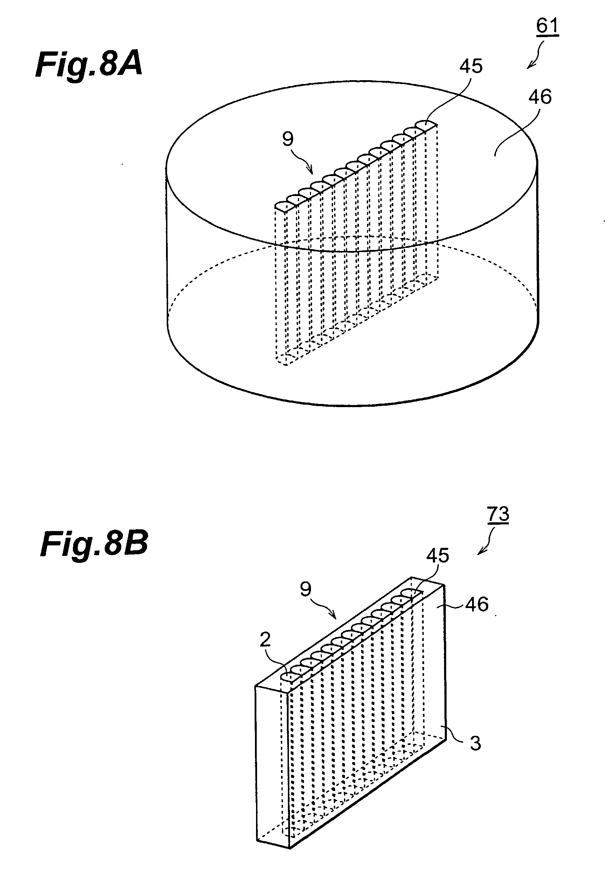

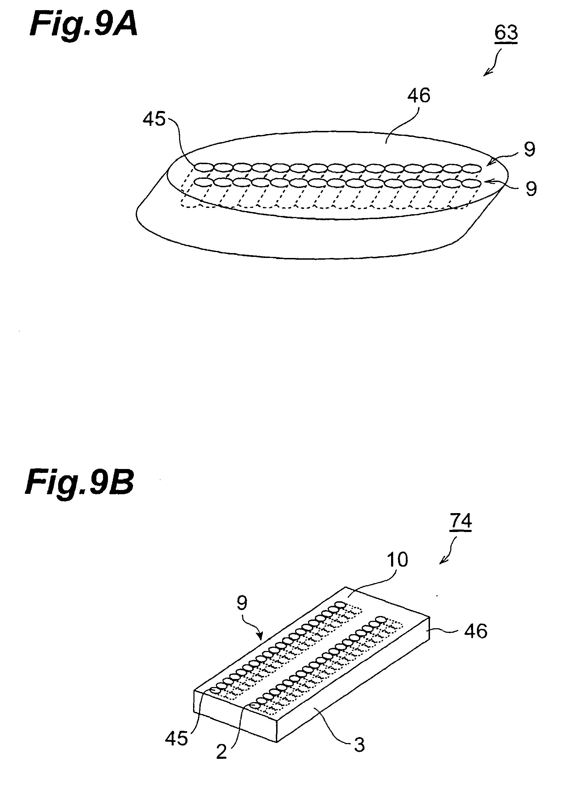

As shown in Figs. 8A and 8B, when the rod portion 48 obtained in Fig. 4B is to be sliced, slicing may be performed thick to form an optical lens form 61 (see Fig. 8A). Then, an optical lens 73 that can cope even with a semiconductor laser array formed by stacking a plurality of stages is realized. As shown in Figs. 9A and 9B, when the rod portion 48 is to be sliced, slicing may be performed to be inclined by 45° with respect to the axial direction (i.e., the drawing direction of secondary drawing) of the rod portion 48. Then, an optical lens form 63 in which the respective first optical members are arrayed to be inclined with respect to the axial directions of first optical member arrays 9 can be fabricated. Fig. 9B shows an optical lens 74 fabricated by cutting this optical lens form 63. In the optical lens 74, two rows of first optical member arrays 9, in each of which respective first optical members 2 are inclined by 45°, are arrayed. The light beams becoming incident on an optical lens 1 are rotated by the two rows of the first optical member arrays 9 through 90° about the optical axis as the central axis, and are emitted.

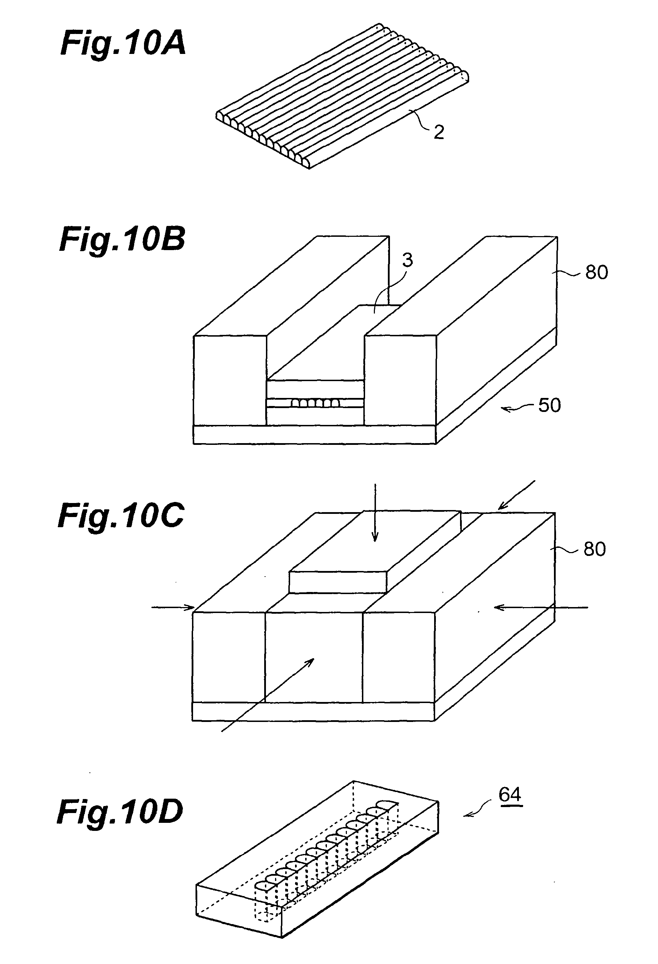

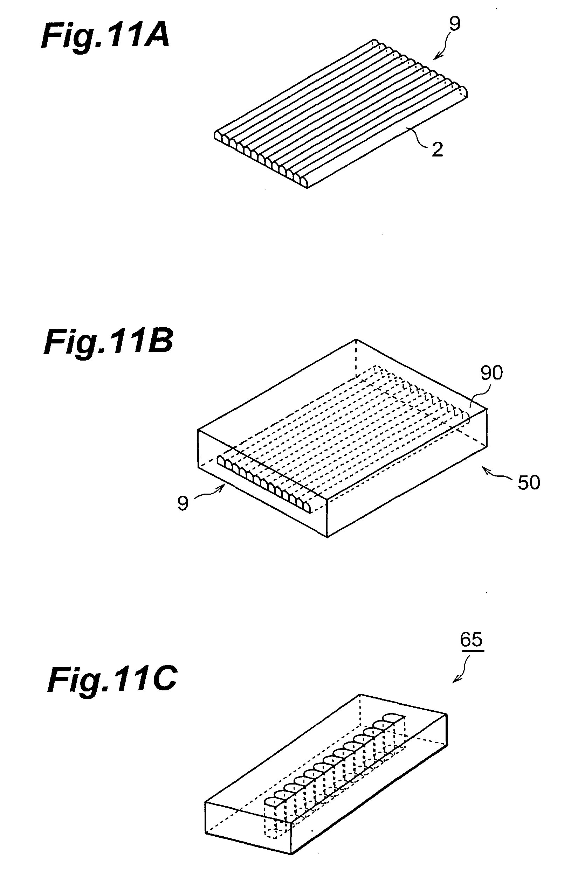

Figs. 10A to 10D are schematic views showing the steps in a method of manufacturing an optical lens according to another embodiment. A plurality of first optical members 2 each fabricated by either one of the methods of Figs. 1 to 3 are arrayed in one row, as shown in Fig. 10A, to form a first optical member array 9. The first optical member array 9 is vertically sandwiched by a pair of second optical members 3, thereby forming an optical lens preform 50 (see Fig. 10B; in Fig. 10B, the optical lens preform 50 is mounted in a heating compressor 80 (to be described later)). Each first optical member 2 fabricated by either one of the methods of Figs. 1 to 3 has been subjected to drawing until it corresponds to the pitch width of each light-emitting portion of the semiconductor laser array. In this embodiment, the first transparent material as the material that forms the first optical members 2 and the second transparent material as the material that forms the second optical members 3 may be glass or a plastic material. The optical lens preform 50 is set in the heating compressor 80, as shown in Fig. 10C, and is heated (700°C) and compressed (50 kg/cm²) from the above and below, the forward and backward, and the left and right. In this manner, an optical lens form 64 is formed (see Fig. 10D). The subsequent steps are the same as those in the first embodiment. With the manufacturing method according to the second embodiment, an optical lens can be fabricated by performing drawing operation once. Figs. 11A to 11C are schematic views showing the steps in a method of manufacturing an optical lens according to a further embodiment. A plurality of first optical members 2 each fabricated by the method of Fig. 3 are arrayed in one row, as shown in Fig. 11A, to form a first optical member array 9. The first optical member array 9 is solidified with a transparent resin 90 from around to form an optical lens preform 50. In the same manner as in the previous embodiment, each first optical member 2 fabricated by the method of Fig. 3 has been subjected to drawing until it corresponds to the pitch width of each light-emitting portion of the semiconductor laser array. In this embodiment, the first transparent material as the material that forms the first optical members 2 may be glass or a plastic material. This optical lens preform 50 is sliced to obtain an optical lens form 65 as shown in Fig. 11C. The subsequent steps are the same as those in the invention. With the manufacturing method according to this embodiment, an optical lens can be fabricated by performing drawing operation once, in the same manner as in the previous embodiment. Since the resin used for hardening transmits light, it serves as an optical member, and can also form the second optical acting portion 12 as shown in Fig. 7C. As has been described above, with the optical lens manufacturing methods according to the respective embodiments of the present invention, the shape of the optical lens, and particularly the shape of the first optical acting portion, can be determined at the stage of the preform before primary drawing. Thus, the preform is machined with a sufficiently large size. Therefore, the machining operations can be performed simply and accurately, and the burden in the manufacture is also reduced.

With the buried type optical lens manufacturing methods according to the respective embodiments of the present invention, at the stage of the preform before secondary drawing, the first optical member array can be arranged to be surrounded by the second optical member. Thus, the preform is fabricated with a sufficiently large size. Therefore, the arranging operations can be performed simply and accurately, and the burden in the manufacture is also reduced.

Although the present invention has been described in detail by means of the aforementioned embodiments, note that the present invention is not limited to these embodiments that merely indicate the best mode in practicing the present invention, but incorporates any modifications of the present invention within the scope of the claims of the present invention, and that the shape, size, arrangement, and constitution of the present invention can be changed.

For example, as the action against the light beam, a case has been described wherein the light beams emitted from the respective light-emitting portions of a semiconductor laser array are collimated and emitted. Alternatively, the light beams may be condensed in place of being collimated.

### Industrial Applicability

As described above, the optical lens manufacturing method according to the present invention is suitable for acting on a light beam emitted from a light-emitting device, and particularly suitable for acting on light beams emitted from the respective light-emitting portions of a light-emitting device in which a plurality of light-emitting portions are

## Claims

1. A method of manufacturing an optical lens, the method comprising:
forming a first optical lens preform (240) of a first transparent material by forming an array of half-cylinders arranged side by side in contact with each other;
drawing the first optical lens preform (240); and
slicing the first optical lens preform (240) to form a first optical lens (2) for receiving light (6) emitted from a semiconductor laser array.

2. The method of claim 1 comprising:
forming a second transparent material around the first optical member preform (240) to form a second optical lens preform (52);
drawing the second optical lens preform (52);
slicing the second optical lens preform (52) to form an optical lens form (60, 61, 63); and
cutting the optical lens form (60, 61, 63) to form a second optical lens (1, 71, 72, 73, 74).

## Patentansprüche

1. Verfahren zur Herstellung einer optischen Linse, wobei das Verfahren Folgendes umfasst:
Bilden einer ersten Vorform (240) der optischen Linse aus einem ersten transparenten Material durch das Bilden einer Anordnung von Halbzylindern, die nebeneinander in Kontakt miteinander angeordnet sind;
Ziehen der ersten Vorform (240) der optischen Linse; und
Abschneiden der ersten Vorform (240) der optischen Linse, um eine erste optische Linse (2) zum Empfangen von Licht (6), das von einer Halbleiterlaseranordnung ausgestrahlt wird, zu bilden.

2. Verfahren nach Anspruch 1, umfassend:
Bilden eines zweiten transparenten Materials um die erste Vorform (240) des optischen Elements zum Bilden einer zweiten Vorform (52) einer optischen Linse;
Ziehen der zweiten Vorform (52) der optischen Linse;
Abschneiden der zweiten Vorform (52) der optischen Linse, um eine optische Linsenform (60, 61, 63) zu bilden; und
Schneiden der optischen Linsenform (60, 61, 63) zum Bilden einer zweiten optischen Linse (1, 71, 72, 73, 74).

## Revendications

1. Procédé de fabrication d'une lentille optique, le procédé comprenant le fait :
de former une préforme (240) de première lentille optique d'un premier matériau transparent en formant un réseau de demi-cylindres agencés côte à côte en contact les uns avec les autres ;
de dessiner la préforme (240) de première lentille optique ; et
de trancher la préforme (240) de première lentille optique pour former une première lentille optique (2) destinée à recevoir la lumière (6) émise à partir d'un réseau de lasers à semi-conducteurs.

2. Procédé de la revendication 1, comprenant le fait :
de former un deuxième matériau transparent autour de la préforme (240) d'un premier élément optique pour former une préforme (52) de deuxième lentille optique ;
de dessiner la préforme (52) de deuxième lentille optique ;
de trancher la préforme (52) de deuxième lentille optique pour former une forme (60, 61, 63) de lentille optique ; et
de couper la forme (60, 61, 63) de lentille optique pour former une deuxième lentille optique (1, 71, 72, 73, 74).
